# EUROPEAN PATENT APPLICATION

(11) **EP 3 135 423 A1**
(43) Date of publication of application: **01.03.2017**
(21) Application number: 16772569.6
(22) Date of filing: 24.03.2016
(51) Int. Cl.: B23K 11/11

(54) **SPOT WELDING METHOD FOR THIN STEEL PLATE AND SPOT WELDING JOINT**

(30) Priority: 27.03.2015 JP 2015066137
(71) Applicant: Hirotec Corporation, Hiroshima-shi, Hiroshima 731-5197 (JP)
(72) Inventor: MATSUMOTO, Koji, Hiroshima-shi Hiroshima 731-5197 (JP); KONO, Takanori, Hiroshima-shi Hiroshima 731-5197 (JP)
(74) Representative: Puschmann Borchert Bardehle Patentanwälte Partnerschaft mbB
(86) International application number: PCT/JP2016/059447
(87) International publication number: WO 2016/158688

(57) **Abstract**

Provided is a spot welding method of a thin steel sheet that is suitably applicable to articles, e.g., automobile parts, for which an appearance quality in a welded part is important, and is excellent in positioning quality, welding strength, and formability of a set of a protrusion and a recess or a protrusion and a recess to be fitted (projections to be fitted to each other). A spot welding method according to the present invention, for welding an upper member and a lower member, each made of a thin steel sheet, with the upper member and the lower member stacked and sandwiched by electrodes, the spot welding method including providing projections being configured to be used for relative positioning of the upper member and the lower member and to be subjected to the welding, the spot welding method includes forming the projections by drawing so that each of the projections has a truncated cone shape, a gradient from 45° to 70°, and a bottom being opened, the opening having an outer diameter smaller than an outer diameter of the corresponding electrode, the projections being provided on the upper member and the lower member respectively and being configured to be fitted to each other.

## Description

### TECHNICAL FIELD

The present invention relates to a spot welding method of a thin steel sheet and to a spot welded joint, the spot welding method and the spot welded joint being frequently employed for automobile parts, electric apparatus parts, and the like.

### BACKGROUND ART

A spot welding method is often used to form automobile parts, electric apparatus parts, and the like. Further, it is well known that a body of an automobile is mass-produced by a spot welding method using a welding robot. However, in many cases, general automobile parts, general electric apparatus parts, and the like are set at their individual jigs, and are then subjected to a forming process using a simple spot welding apparatus. Such jigs for the automobile parts, the electric apparatus parts, and the like are necessary to be produced each time of the forming process. In consideration of these, proposals for performing the spot welding with an improved efficiency and a reduced labor have been made.

For example, Patent Literature 1 proposes a spot welding method. According to this spot welding method, each of first and second base metals has one surface serving as a welding surface. The welding surface of the first base metal has a portion to be welded, and a protrusion is formed in this portion in a protruded manner. The welding surface of the second base metal has a portion which is located to correspond to the position of the protrusion, and a recess configured to be substantially fitted to the protrusion is formed in this portion in a depressed manner. The protrusion and the recess are abutted to each other, the first and second base metals are clamped by electrodes, and the first and second base metals are energized under pressure for pressure welding. In this spot welding method, regarding the recess configured to be substantially fitted to the protrusion, for example, it is described that a protrusion having a spherical surface having a suitable curvature is formed in a protruded manner, and a recess having a curvature that is slightly larger than the curvature of the protrusion is formed in a depressed manner. According to this method, it is described that welding can be performed while positioning of portions to be welded in the base metals is performed easily and accurately without a positioning jig or a processing treatment that is not directly related to the welding.

Patent Literature 2 proposes a spot welding method of a metal plate. According to this method, projections respectively having heights h1 and h2 and outer diameters D1 and D2 are formed by punching in portions to be welded, so that a set of a protrusion and a recess is formed. The set of the protrusion and the recess are fitted to each other, and are then energized under pressure by electrodes. According to this spot welding method, it is described that the set of the protrusion and the recess can be formed by turret punching. It is described that a stroke of the turret punching for forming the projections is necessary to be limited to a range from 0.1 mm to 0.3 mm. Furthermore, according to this invention, it is described that positioning of a welding portion in which a metal plate workpiece is welded to a metal plate can be performed in an automated manner, and thus a troublesome positioning process can be omitted.

Patent Literature 3 proposes a welding structure for an electrical component. According to the welding structure, a metal plate wire and a metal plate resistance are connected to each other electrically and mechanically by welding. The metal plate wire and the metal plate resistance have respective positioning parts, one of which is a protrusion and the other of which is a recess. The positioning parts are configured to be fitted to each other for positioning. Further, according to an embodiment of the welding structure, fitting protrusions 51 and 52 and fitting recesses 53 and 54 have a cylindrical shape, however, they are not limited to the cylindrical shape. It is described that the fitting protrusions 51 and 52 and the fitting recesses 53 and 54 may have any shape such as a quadrangular prism or a trapezoid, as long as the fitting protrusions 51 and 52 and the fitting recesses 53 and 54 can be fitted to each other, respectively. Furthermore, according to the embodiment, it is described that the fitting protrusions 51 and 52 are formed to have an outer diameter smaller than an outer diameter of a welding electrode trunk X, but the fitting protrusions 51 and 52 may alternatively be formed to have an outer diameter larger than that of the welding electrode trunk X.

### CITATION LIST

### PATENT LITERATURE

Patent Literature 1: JP-A-02-229679
Patent Literature 2: JP-A-04-147776
Patent Literature 3: JP-A-2005-216622

### SUMMARY OF THE INVENTION

### PROBLEMS TO BE SOLVED BY THE INVENTION

Patent Literature 3 proposes the welding structure including the positioning parts made of the protrusion and the recess, which are configured to be fitted to each other and have a cylindrical shape. Patent Literature 3 states that the protrusion and the recess are not necessarily limited to the cylindrical shape, and may have any shape such as a quadrangular prism or a trapezoid as long as the protrusion and the recess can be fitted to each other. However, if the heights of the protrusion and the recess are increased in order to improve a positioning functionality, this leads to a problem such as occurrence of a variation in welding strength, which impairs an appearance of a jointed part. Therefore, even if a protrusion and a recess are configured to be fitted to each other, the protrusion and the recess are desired to be the ones having a combination of a protrusion shape and a recess shape suitable for the spot welding method.

The protrusion and the recess described in Patent Literature 1 encompass the protrusion and the recess having a spherical surface. The protrusion and the recess of Patent Literature 2 that are formed by turret punching have a height from 0.1 mm to 0.3 mm. In consideration of these, judging a positioning quality in terms of fitting performance, fitting stability, and the like of stacked metal plates may not always be appropriate.

The spot welding methods according to the prior art including the set of the protrusion and the recess or the protrusion and the recess to be fitted to each other are not entirely satisfactory, when studied comprehensively in terms of formability of a projection, a relative positioning quality between thin steel sheets to be spot-welded, and a welding strength and an appearance quality after spot welding. In order to deal with this problem, the present invention has an object to provide a spot welding method of a thin steel sheet and a spot welded joint each of which satisfies all of the above properties in a good balance and are highly evaluated from a comprehensive viewpoint.

### SOLUTIONS TO THE PROBLEMS

A spot welding method according to the present invention, for welding an upper member and a lower member, each made of a thin steel sheet, with the upper member and the lower member stacked and sandwiched by electrodes, the spot welding method including providing projections being configured to be used for relative positioning of the upper member and the lower member and to be subjected to the welding, the spot welding method includes: forming the projections by drawing so that each of the projections has a truncated cone shape, a gradient from 45° to 70°, and a bottom being opened, the opening having an outer diameter smaller than an outer diameter of the corresponding electrode, the projections being provided on the upper member and the lower member respectively and being configured to be fitted to each other.

In the above described invention, a contact portion of a lower surface of a top portion of the upper member and a contact portion of an upper surface of a top portion of the lower member are preferably shaped so as to allow the lower surface of the top portion of the projection of the upper member and the upper surface of the top portion of the projection of the lower member to be in contact with each other only in center portions. The lower surface of the top portion of the projection of the upper member in the contact portion can be formed to be a flat surface or a curved shape to have a spherical surface, and the upper surface of the top portion of the projection of the lower member can be formed to be a curved shape to have a spherical surface having a smaller curvature radius as compared to the curved shape of the lower surface of the top portion of the upper member.

Moreover, each of the projections preferably has a height from 1.5 mm to 2.4 mm. In addition, each of the projections is preferably formed such that the thin steel sheet has an elongation percentage from 30% to 10%.

Furthermore, the projections to be fitted to each other include two or more projections including at least main reference projections and sub reference projections provided such that one of the projections provided on the lower member enters, with a predetermined clearance, one of the projections provided on the upper member. The projections to be fitted to each can include a set of the main reference projections having a clearance S along an X-axis direction and a Y-axis direction, and a set of the sub reference projections having a clearance D, which is larger than the clearance S, along the X-axis direction and having the clearance S along the Y-axis direction, where the X-axis is a direction of connecting a center of the main reference projections and a center of the sub reference projections and the Y-axis is a direction perpendicular to the direction of connecting the center of the main reference projections and the center of the sub reference projections.

In the above described invention, moreover, a shape guide can be provided so as to be in contact with a portion of a flat surface of the upper member in at least one position, the flat surface of the upper member being substantially perpendicular to a flat surface of the lower member, the flat surface of the lower member being to be subjected to the spot welding, and the shape guide can be configured to guide the relative positioning of the upper member and the lower member. Furthermore, the shape guide can be provided so as to limit movement along a direction perpendicular to the direction of connecting the center of the main reference projections and the center of the sub reference projections.

In the above described invention, moreover, the projections to be fitted to each other are preferably formed to have process accuracy as specified by JISB0408.

Moreover, a spot welded joint according to the present invention is the spot welded joint formed by spot-welding an upper member and a lower member, each made of a thin steel sheet, with the upper member and the lower member stacked and sandwiched by electrodes, one surface of the spot welded joint having a protrusion, another surface of the spot welded joint having a recess, the protrusion having a burr height of not more than 0.5 mm from a non-spot-welded joint flat surface portion.

### EFFECTS OF THE INVENTION

According to the present invention, it is possible to perform spot welding of thin steel sheets in a manner excellent in formability of projections to be fitted to each other, in positioning quality, and in welding strength. Further, it is possible to provide a spot welded joint having such excellent properties. Furthermore, fitted portions of projections respectively provided on an upper member and a lower member are usable as a jig for spot welding. Thus, it is not necessary to prepare an individual welding jig.

### BRIEF DESCRIPTION OF THE DRAWINGS

- Fig. 1: is a schematic view of projections for spot welding of the present invention.
- Fig. 2: is a schematic view of a projection that is formed in a lower member and is suitable for the spot welding of the present invention.
- Fig. 3: is a schematic view of a cross-section of a spot welded joint of the present invention.
- Fig. 4: is a table of evaluations regarding a projection shape suitable for the spot welding.
- Fig. 5: is a diagram for explaining an elongation percentage of a steel sheet.
- Fig. 6: is a table showing a result of summarizing the results in Fig. 4 in terms of a formability, a welding strength, an appearance quality, and a positioning quality.
- Fig. 7: is a comprehensive evaluation table for showing a projection shape suitable for the spot welding.
- Fig. 8: is a graph showing a relationship between a formable minimum opening diameter and a gradient of a projection.
- Fig. 9: is a graph showing an elongation percentage observed when a projection having a minimum opening diameter is formed.
- Fig. 10: illustrates an arrangement of main reference projections and sub reference projections for the spot welding of an automobile door.
- Fig. 11: is an enlarged schematic view of the main reference projections and the sub reference projections in Fig. 10.

### DESCRIPTION OF EMBODIMENTS

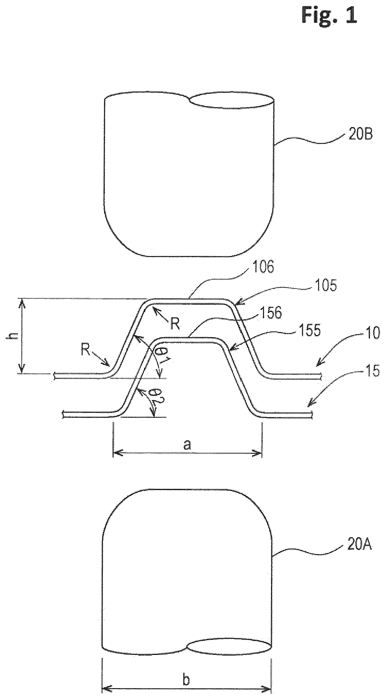

The following describes an embodiment of the present invention. A spot welding method according the present invention is a spot welding method for welding an upper member and a lower member, each made of a thin steel sheet, with the upper member and the lower member stacked and sandwiched by electrodes, the spot welding method including providing projections being configured to be used for relative positioning of the upper member and the lower member and to be subjected to the welding. Further, in this spot welding method, the projections configured to be fitted to each other are formed respectively in the upper member and the lower member. The projections are formed by drawing so that each of the projections has a truncated cone shape, a gradient from 45° to 70°, and a bottom being opened, the opening having an outer diameter smaller than an outer diameter of a corresponding one of the electrodes. Namely, as shown in Fig. 1, according to the spot welding method of the thin steel sheet, an upper member 10 and a lower member 15 each made of a thin steel sheet respectively have a projection 105 and a projection 155 each having a truncated cone shape. The projection 105 and the projection 155 are formed by drawing so as to have gradients (θ1, θ2) from 45° to 70° and openings having outer diameters (opening diameter *a*) smaller than an outer diameter b of a corresponding electrode 20. The upper member 10 and the lower member 15 are stacked such that the projection 155 and the projection 105 provided as above are fitted to each other, that is, the projection 155 enters the projection 105. The upper member 10 and the lower member 15 thus stacked are sandwiched by the electrodes 20 (20A, 20B), and are then spot-welded.

In the present invention, the upper member refers to a member that has a projection configured to receive the projection provided on the lower member when the upper member is stacked on the lower member as in the above manner. The opening diameter refers to a dimension (i.e., an outer diameter a in Fig. 1) of the opening of the projection having a truncated cone shape, the dimension being measured in consideration of a so-called tangent point. The gradient refers to an angle made by a generating line of a conical surface and a bottom plane. The thin steel sheet refers to a cold rolled steel sheet as specified by JISG3141. The present invention is suitably applicable to a thin steel sheet that has a thickness from 0.4 mm to 1.6 mm and is frequently used for automobile parts and electric apparatus parts.

For the projections that are formed in the upper member and the lower member and are configured to be fitted to each other, there is a shape suitable for the spot welding. Specifically, a contact portion of a lower surface of a top portion of the upper member and a contact portion of an upper surface of a top portion of the lower member are shaped so as to allow the lower surface of the top portion of the projection of the upper member and the upper surface of the top portion of the projection of the lower member to be in contact with each other only in center portions. For example, the lower surface of the top portion of the projection of the upper member is formed to be a flat surface or a curved shape to have a spherical surface, and the upper surface of the top portion of the projection of the lower member is formed to be a curved shape to have a spherical surface having a curvature radius smaller as compared to the curved shape of the lower surface of the top portion of the upper member.

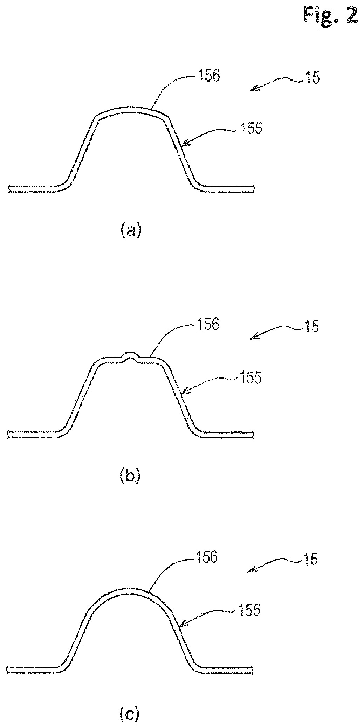

As for the projection of the upper member, as shown in Fig. 1, an upper surface 106 of the top portion of the projection 105 of the upper member 10 is preferably shaped to have a flat surface, or can be formed to be a curved shape to have a spherical surface having a large curvature. As for the projection of the lower member, as shown in Fig. 2, an upper surface 156 of the top portion of the projection 155 of the lower member 15 can be shaped to have any of the shapes shown in Fig. 2. Specifically, the upper surface 156 of the top portion of the projection 155 of the lower member 15 can be formed to be a curved shape to have a spherical surface curving more sharply as compared to the curved shape of the lower surface of the top portion of the upper member, and preferably has the shape shown in Fig. 2(a). When the projection 155 having the shape shown in Fig. 2 and the projection 105 of the upper member 10 are fitted to each other, the upper surface 156 of the top portion of the projection 155 comes into contact with the upper surface 106 of the top portion of the projection 105, so that electric conduction between the lower member 15 and the upper member 10 is achieved reliably during the spot welding. As a result, a stable melted and jointed state of the fitting portion between the projection 155 and the projection 105 is achieved. Thus, the spot welding excellent in welding strength, appearance, and quality can be performed.

The projection 155 of the lower member 15 can be formed to have the shape shown in Fig. 2(b) or the shape shown in Fig. 2(c). The projection 155 of the lower member 15 shown in Fig. 2(b) has a projection in a center portion of the upper surface 156 of the top portion that is shaped in a flat surface. The projection 155 of the lower member 15 shown in Fig. 2(c) has a spherical surface that has a curved shape as a whole with a small curvature radius.

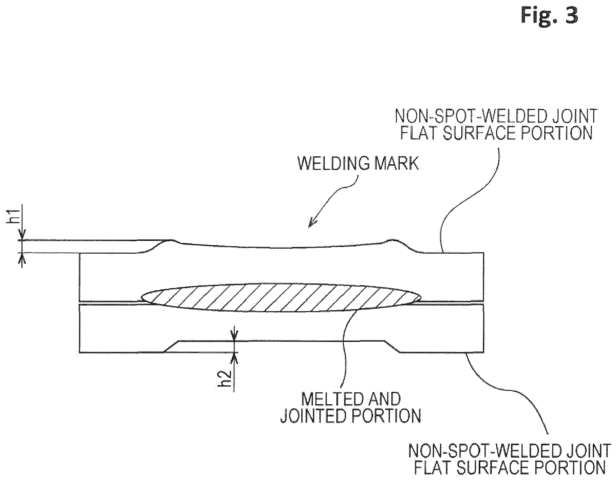

Fig. 3 is a schematic view of a cross-section of a spot-welded portion in an example in which the spot welding is performed. In this example, the projection 105 of the upper member 10 has the upper surface 106 of the top portion shaped in a flat surface (Fig. 1), and the projection 155 of the lower member 15 has the upper surface 166 of the top portion shaped as shown in Fig. 2(a). The spot welding is performed with the projection 105 and the projection 155 fitted to each other. According to the spot welding of the known techniques, in a spot-welded portion, recessed spot-welding marks are made in both of the upper member and the lower member. On the other hand, according to the present spot welding, the projections themselves are spot-welded, and therefore characteristic spot-welding marks are made in the upper and lower members. Specifically, a protruded spot-welding mark is made in the upper member, and a recessed spot-welding mark is made in the lower member. Namely, according to the present spot welding, it is possible to securely fuse the upper member 10 and the lower member 15 to each other in the spot-welded portion, and also to allow the welding mark to have a burr height h1 of not more than 0.5 mm from a non-spot-welded joint flat surface portion of the upper member 10.

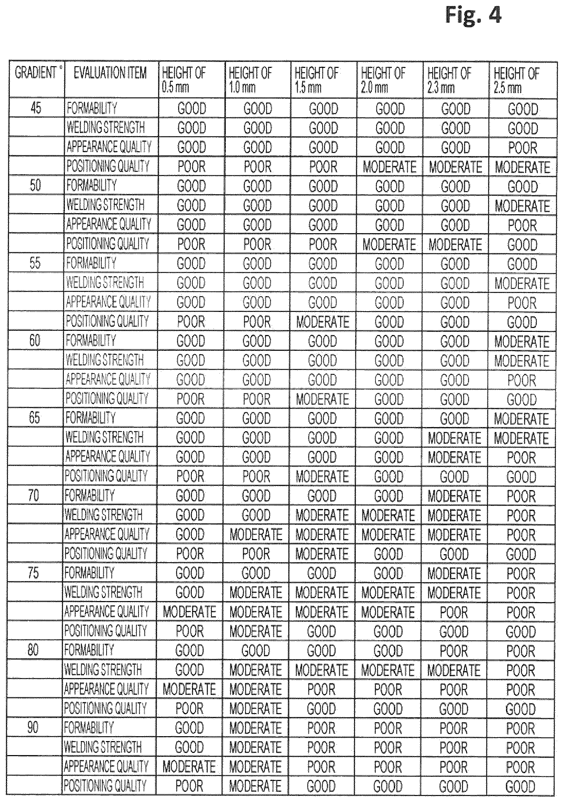

The present invention is based on the results of a comprehensive test and study as to suitable projection shapes and a combination thereof for performing the spot welding of the thin steel sheets having the projections to be fitted to each other. The test and the study relate to formability of the projections, a positioning quality in stacking of the thin steel sheets in such a manner as to allow the projection to be fitted to each other, and a welding strength and an appearance quality after the spot welding. The results of the test and the study are shown in Fig. 4. Fig. 4 is a table of evaluations in terms of the formability, the welding strength, the appearance quality, and the positioning quality of projections having a gradient from 45° to 90° and a height from 0.5 mm to 2.5 mm. This table was made in the following manner. That is, first, with use of thin steel sheets having a thickness of 0.65 mm and thin steel sheets having a thickness of 1.2 mm, a set of an upper member having a thickness of 0.65 mm and a lower member having a thickness of 1.2 mm, a set of an upper member having a thickness of 1.2 mm and a lower member having a thickness of 1.2 mm, and a set of an upper member having a thickness of 1.2 mm and a lower member having a thickness of 0.65 mm were prepared. By using these, projections to be fitted to each other were prepared so as to have a combination of a bending radius R of 0.5 mm (see Fig. 1), one gradient θ selected from 45° and 90°, and one height h selected from 1.5 mm, 2.0 mm, 2.3 mm, and 2.5 mm, and 30 sets of such projections were prepared for each combination. With use of electrodes having an outer diameter of 13 mm, the spot welding test was conducted. Then, the results of the spot welding tests conducted on the sample pieces were evaluated in terms of the formability, the welding strength, the appearance quality, and the positioning quality. Next, based on the results of the evaluations, formabilities, welding strengths, appearance qualities, and positioning accuracies to be obtained with other gradients and other heights were worked out by estimation by interpolation and the like. Fig. 4 is a table including the results of the estimation and the results of the above tests.

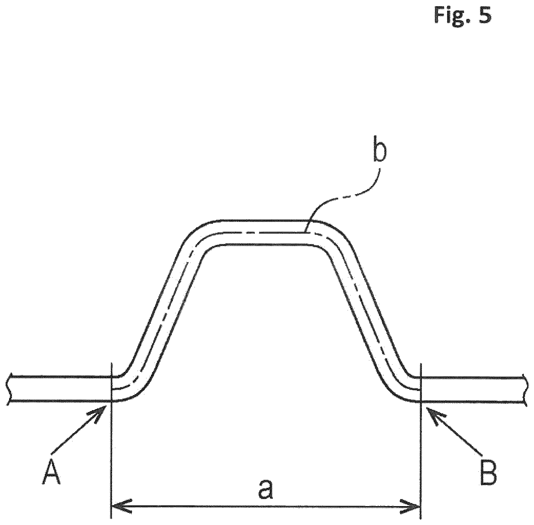

Regarding the formability, since a thin steel sheet having an elongation percentage of not less than 30% was damaged in its bent portion, a sample having an elongation percentage of not more than 27% was determined to be formable and rated as "good." A sample having an elongation percentage exceeding 27% but under 30% was rated as "moderate", and a sample having an elongation percentage of not less than 30% was rated as "poor." Regarding the welding strength, a tension shear test was conducted according to JISZ3136. Specifically, a sample with a tension shear load of not less than 2.45 kN was rated as "good", and a sample with a tension shear load of less than 2.45 kN was rated as "poor." Regarding the appearance quality, an evaluation was made in terms of a burr height and an appearance after the welding. Specifically, if a sample had, in a welded portion, a burr height (on an upper member side) and a recess depth (on a lower member side) both of which were not more than 0.5 mm, the sample was rated as "good." If a sample had, in a welded portion, a burr height and a recess depth each of which was 0.5 mm but had a poor appearance, the sample was rated as "moderate." If a sample had, in a welded portion, a burr height and a recess depth one of which exceeded 0.5 mm, the sample was rated as "poor." Regarding the positioning quality, a sensory evaluation by 10 or more persons was conducted. Specifically, if fitting performance and fitting stability observed when a set of projections in an upper member and a lower member were fitted to each other were good, the sample was rated as "good." If the fitting performance and the fitting stability were poor, the sample was rated as "poor." If the fitting performance and the fitting stability were not good but were within an allowable range when evaluated from a comprehensive viewpoint, the sample was rated as "moderate." The fitting performance refers to an evaluation made based on how smoothly a set of projections are fitted to each other. The fitting stability refers to an evaluation made based on stability and reliability of fitting between projections observed after the projections are fitted to each other. The elongation percentage refers to a value obtained by (***b-a***) /***a*** x 100 (%), where "***a***" denotes an opening diameter and "b" denotes a length of a center line in a steel sheet from tangent point A to tangent point B in Fig. 5. For example, in a case where ***a*** =10 mm and ***b*** =12 mm, an elongation percentage is 20%.

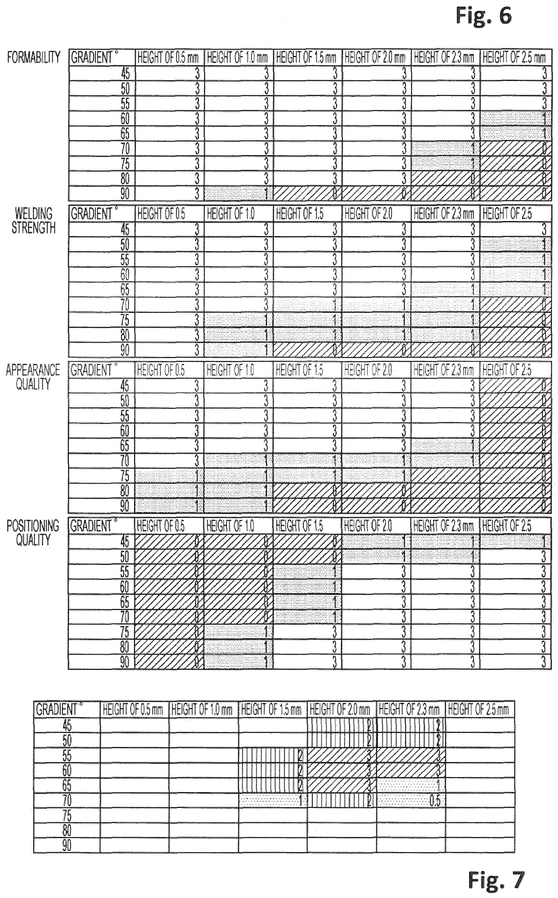

Fig. 6 shows a result of summarizing, based on the result shown in Fig. 4, the evaluations in terms of the formability, the welding strength, the appearance quality, and the positioning quality. In Fig. 6, the result "good" in Fig. 4 was given three points (white background), the result "moderate" in Fig. 4 was given one point (dotted), and the result "poor" in Fig. 4 was given zero point (shaded with slanted lines). According to Fig. 6, it is shown that the evaluations in terms of the formability are highly similar to the evaluations in terms of the welding strength. That is, this shows that a sample having a poor formability is highly possible to have a poor welding quality. On the other hand, the evaluations in terms of the appearance quality are not similar to the evaluations in terms of the positioning quality. That is, this shows that a sample having a good appearance may have a poor positioning quality in some cases. Further, the evaluations on the samples having a gradient of 90° (i.e., fitted projections having a cylindrical shape) were unfavorable as a whole. That is, it is shown that the set of projections having a gradient of 90° is not favorable when evaluated comprehensively in terms of the formability, the welding strength, the appearance quality, and the positioning quality. Further, it is shown that the set of large gradients or the set of large projection heights is not favorable in general. Furthermore, it is also shown that the set of small projection heights is not favorable.

Fig. 7 shows a result of comprehensive evaluations in terms of the formability, the welding strength, the appearance quality, and the positioning quality. Specifically, the comprehensive evaluations in Fig. 7 were made as follows. A sample having three points in all of the evaluation items of the formability, the welding strength, and the appearance quality or the positioning quality in Fig. 6 was given three points (shaded with slanted lines). A sample having one point in one of the evaluation items of the formability, the welding strength, and the appearance quality or the positioning quality was given two points (shaded with vertical lines). A sample having one point in two of the evaluation items of the formability, the welding strength, and the appearance quality or the positioning quality was given one point (dotted). A sample having one point in any three evaluation items was given 0.5 points (dotted). A sample having zero point in at least one of the above evaluation items was given zero point (white background).

According to Fig. 7, although the projections formed in the upper member and the lower member may have a gradient from 45° to 70°, it is preferable that the projections have a gradient from 55° to 65°. It is desirable that the projections have a height from 1.5 mm to 2.3 mm, preferably from 2.0 mm to 2.3 mm. Considering the test results on the projections respectively having heights of 2.3 mm and 2.5 mm, the projections may have a height of 2.4 mm. Projections that are to be fitted to each other and have an identical gradient (θ1 = θ2 in Fig. 1) are excellent in welding strength, appearance quality, and positioning quality.

As described above, the evaluations on the projections in terms of the formability are highly similar to the evaluations on the projections in terms of the welding strength. From this, a precondition is defined as follows. That is, a projection should have an elongation percentage of less than 30% during formation of the projection in order to achieve a satisfactory welding strength. A study was conducted on a relationship between a gradient, a height, and an opening diameter of a projection that satisfied the above precondition. The result of this study is shown in Fig. 6. In Fig. 6, a horizontal axis indicates a gradient, and a vertical axis indicates a minimum opening diameter formable in the projection. A parameter therein indicates a height of the projection. In this study, the upper member and the lower member had a thickness of 0.65 mm. A bending radius R resulting from processing for the projection was R = 0.5 mm.

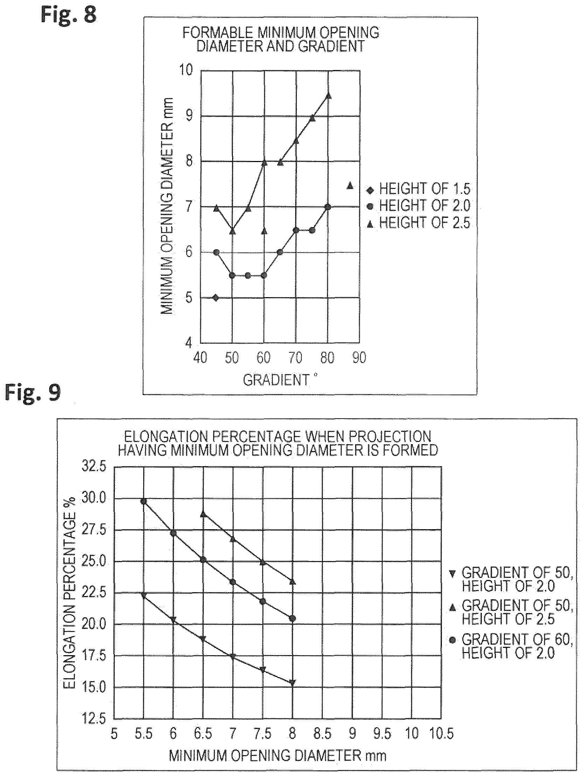

It is assume that a minimum opening diameter of a projection having a gradient of not more than 45° is large. However, according to Fig. 8, the minimum opening diameter becomes large drastically with respect to the gradient of less than 50° and with respect to the gradient exceeding 60°. Further, according to Fig. 8, with respect to the gradient from 50° to 60°, the minimum opening diameter is minimum and takes an almost fixed value independently of the gradient. Furthermore, the projection having a height of 2.0 mm has a minimum opening diameter in a range from 5.5 mm to 6.5 mm. Meanwhile, the projection having a height of 2.5 mm has a minimum opening diameter in a range from 6.5 mm to 9.5 mm. Namely, in order to perform the spot welding with high quality and stability in consideration of a variation in shapes of the projections, it is preferable that the projection have a gradient in a range from 50° to 60°. Further, it is shown that a stable quality can be achieved when the projection has a height of 2.0 mm, which is lower than 2.5 mm.

Fig. 9 is a graph showing a relationship between an elongation percentage of a thin steel sheet and a gradient of a projection observed when a projection having a minimum opening diameter is formed. In Fig. 7, a horizontal axis indicates a minimum opening diameter, and a vertical axis indicates an elongation percentage. Parameters therein show differences in gradient and height between the projections. According to Fig. 9, each of the elongation percentage curves therein has a gentler gradient and protrudes further downward with respect to a larger minimum opening diameter. For example, an elongation percentage curve for a gradient of 50° and a height of 2.0 mm will exhibit an elongation percentage of approximately 12.5%, which is not less than 10%, with respect to a minimum opening diameter of approximately 10 mm. Further, according to Fig. 9, as a gradient or a height of a projection becomes larger, an elongation percentage becomes larger. For example, in a case of the minimum opening diameter of 8 mm, changing the gradient from 50° to 60° results in an increase in elongation percentage by 34%, whereas changing the height from 2.0 mm to 2.5 mm results in an increase in elongation percentage by as much as 54%. This shows that the height of the projection has a large effect on determination of the minimum opening diameter.

For typical spot welding of a thin steel sheet, welding conditions such as a welding current, an energizing time, an electrode pressurizing force, and an electrode diameter are suitably determined in order to obtain a nugget diameter of approximately five times square root of a thickness of a steel sheet. For the electrode diameter, an electrode diameter of not less than a necessary nugget diameter is selected. In order to perform the spot welding on projections as those used in the present invention, the selection of the electrode outer diameter is necessary to be made in consideration of not only the necessary nugget diameter but also opening diameters of the projections. The reason for this is as follows. With the electrode diameter smaller than the opening diameter of the projection, the projection cannot be crushed entirely even if the necessary nugget diameter is obtained. Therefore, for example, for projections having an opening diameter of 7 mm to 8 mm, electrodes having an outer diameter of 13 mm are preferably used.

The foregoing has explained the projections to be used for relative positioning of the upper member and the lower member and to be subjected to welding in the spot welding according to the present invention. Namely, each of the projections that are formed in the upper member and the lower member and are configured to be fitted to each other has a truncated cone shape, has a gradient from 45° to 70°, preferably from 55° to 65°, and has a height from 1.5 mm to 2.4 mm, preferably from 2.0 mm to 2.3 mm. Further, each of the electrodes used in the spot welding preferably has an outer diameter larger than an opening diameter of the projection. For projections having an opening diameter from 9 mm to 10 mm, electrodes having an outer diameter of 13 mm can be used.

Typically, in many cases, stamping of some sort is performed on the upper and lower members that are to be subjected to the above-described spot welding. Thus, preferably, the projections to be used in above-described the spot welding are formed at the time of the stamping simultaneously. This makes it possible to perform the spot welding in a streamlined or labor-saved manner. Further, this eliminates a jig, which has been necessary for the known techniques. This promotes a reduction in labor.

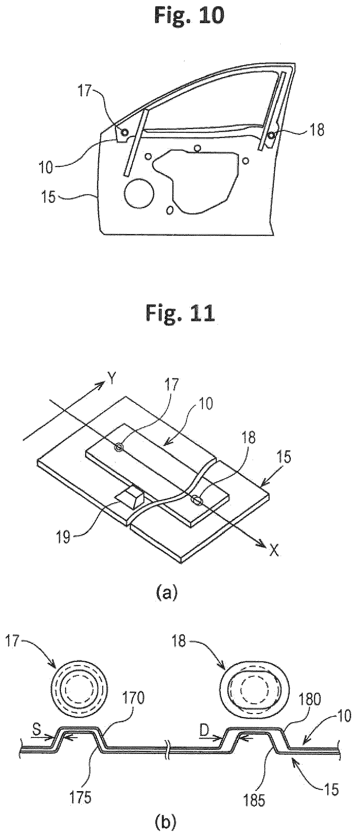

The spot welding of the present invention will be described by taking as an example a door for an automobile. Fig. 10 shows a case where a window frame is spot-welded to an inner panel. Assume that the inner panel is a lower member and the window frame is an upper member. The above-described projections are respectively provided in the upper and lower members as described below, and then the spot welding is performed thereto. First, the projections to be fitted to each other includes two or more projections including at least main reference projections and sub reference projections provided such that one of the projections provided on the lower member enters, with a predetermined clearance, one of the projections provided on the upper member, and the projections are formed so as to be fitted to each other. For example, two sets of projections to be fitted to each other, including the main reference projections and the sub reference projections, are respectively formed in positions of an upper member 10 and a lower member 15, the positions corresponding to welding points 17 and 18 shown in Fig. 10, respectively.

Fig. 11 shows enlarged partial cross-sections of the projections 17 and 18 shown in Fig. 10. As shown in Fig. 11 (b), in the welding point 17, a projection 170 of the upper member 10 and a projection 175 provided on the lower member 15 are fitted to each other. The projections 170 and 175 are referred to as the main reference projections. Further, in the welding point 18, a projection 180 of the upper member 10 and a projection 185 provided on the lower member 15 are fitted to each other. The projections 180 and 185 are referred to as the sub reference projections. The main reference projections (projections 170 and 175) are fitted to each other tightly, whereas the sub reference projections (projections 180 and 185) are fitted to each other gently. For example, assuming that a direction of connecting a center of the main reference projections and a center of the sub reference projections is denoted as an X-axis and a direction perpendicular to this direction is denoted as a Y-axis, a clearance D along the X-axis direction in the sub reference projections is larger than a clearance S in the main reference projections. Further, a clearance along the Y-axis direction in the main reference projections is similar to a clearance along the Y-axis direction in the sub reference projections. The clearance D is larger than the clearance S by approximately 0 mm to 2 mm. The main reference projections and the sub reference projections are used as a reference for attachment and positioning of the upper member 10 and the lower member 15. Preferably, the projections are formed to have accuracy as specified by JISB0408. Consequently, it is possible to achieve a predetermined clearance for the clearance S or the clearance D in the projections to be fitted to each other. Further, as described above, in the sub reference projections, the clearance D along the X-axis direction is large, whereas the clearance S along the Y-axis direction is small. This makes it easy to perform positioning of the upper member 10, and makes it possible to suppress rotation of the main reference projections of the upper member 10. Consequently, it is possible to perform the positioning of the upper member 10 reliably without a backlash. As a result, it is possible to form a projection excellent in welding strength, appearance quality, and positioning quality. Process accuracy thereof is preferably grade A. Further, the X-axis direction is preferably along a longitudinal direction of the upper member 10.

The main reference projections and the sub reference projections, which serve as an assistance of the main reference projections, are used as below. First, the lower member 15 is fixed at a predetermined position, and the upper member 10 is placed thereon so that the main reference projections are fitted to each other and the sub reference projections are fitted to each other. In the sub reference projections (projections 180 and 185), the clearance D along the X-axis direction is provided large. This makes it easier to fit the main reference projections to each other and to fit the sub reference projections to each other. Regarding the fitting between the main reference projections and the fitting between the sub reference projections, a shape guide 19 shown in Fig. 11 (a) makes it further easier to fit the main reference projections to each other and to fit the sub reference projections to each other.

As shown in Fig. 11 (a), the shape guide 19 can be provided so as to be in contact with a portion of a flat surface of the upper member 10 in at least one position, the flat surface of the upper member 10 being substantially perpendicular to a flat surface of the lower member 15, the flat surface of the lower member 15 being to be subjected to the spot welding. The shape guide 19 makes it possible to perform the relative positioning of the upper member 10 and the lower member 15, and makes it further easier to fit the main reference projections to each other and to fit the sub reference projections to each other. Preferably, the shape guide 19 is provided so as to limit movement of the upper member 10 along the direction perpendicular to the direction of connecting the center of the main reference projections and the center of the sub reference projections, i.e., along the Y-axis direction. The reason for this is as follows. The clearance along the Y-axis direction is equal to the clearance S, and accordingly the fitting is made tightly therein. Therefore, by performing the positioning along the Y-axis direction with use of the shape guide, assembly efficiency is significantly improved.

### List of reference signs

- 10: Upper member
- 105: Projection
- 106: Upper surface of the top portion
- 15: Lower member
- 155: Projection
- 156: Upper surface of the top portion
- 17: Main reference welding point
- 18: Sub reference welding point
- 19: Shape guide
- 20, 20A, 20B: Electrode

## Claims

1. A spot welding method for welding an upper member and a lower member, each made of a thin steel sheet, with the upper member and the lower member stacked and sandwiched by electrodes, the spot welding method including providing projections being configured to be used for relative positioning of the upper member and the lower member and to be subjected to the welding, the spot welding method comprising
forming the projections by drawing so that each of the projections has a truncated cone shape, a gradient from 45° to 70°, and a bottom being opened, the opening having an outer diameter smaller than an outer diameter of the corresponding electrode, the projections being provided on the upper member and the lower member respectively and being configured to be fitted to each other.

2. The spot welding method according to claim 1, wherein
a contact portion of a lower surface of a top portion of the upper member and a contact portion of an upper surface of a top portion of the lower member are shaped so as to allow the lower surface of the top portion of the projection of the upper member and the upper surface of the top portion of the projection of the lower member to be in contact with each other only in center portions.

3. The spot welding method according to claim 2, wherein
the lower surface of the top portion of the projection of the upper member in the contact portion is formed to be a flat surface or a curved shape to have a spherical surface, and the upper surface of the top portion of the projection of the lower member is formed to be a curved shape to have a spherical surface having a smaller curvature radius as compared to the curved shape of the lower surface of the top portion of the upper member.

4. The spot welding method according to any one of claims 1 to 3, wherein
each of the projections has a height from 1.5 mm to 2.4 mm.

5. The spot welding method according to any one of claims 1 to 4, wherein
each of the projections is formed such that the thin steel sheet has an elongation percentage from 30% to 10%.

6. The spot welding method according to any one of claims 1 to 5, wherein
the projections to be fitted to each other include two or more projections including at least main reference projections and sub reference projections provided such that one of the projections provided on the lower member enters, with a predetermined clearance, one of the projections provided on the upper member, and
the projections to be fitted to each include a set of the main reference projections having a clearance S along an X-axis direction and a Y-axis direction, and a set of the sub reference projections having a clearance D, which is larger than the clearance S, along the X-axis direction and having the clearance S along the Y-axis direction, where the X-axis is a direction of connecting a center of the main reference projections and a center of the sub reference projections and the Y-axis is a direction perpendicular to the direction of connecting the center of the main reference projections and the center of the sub reference projections.

7. The spot welding method according to claim 6, wherein
a shape guide is provided so as to be in contact with a portion of a flat surface of the upper member in at least one position, the flat surface of the upper member being substantially perpendicular to a flat surface of the lower member, the flat surface of the lower member being to be subjected to the spot welding, and the shape guide is configured to guide the relative positioning of the upper member and the lower member.

8. The spot welding method according to claim 7, wherein
the shape guide is provided so as to limit movement along a direction perpendicular to the direction of connecting the center of the main reference projections and the center of the sub reference projections.

9. The spot welding method according to any one of claims 1 to 8, wherein
the projections to be fitted to each other are formed to have process accuracy as specified by JISB0408.

10. A spot welded joint formed by spot-welding an upper member and a lower member, each made of a thin steel sheet, with the upper member and the lower member stacked and sandwiched by electrodes, one surface of the spot welded joint having a protrusion, another surface of the spot welded joint having a recess, the protrusion having a burr height of not more than 0.5 mm from a non-spot-welded joint flat surface portion.

## Amended claims

### Amended claims under Art. 19.1 PCT

**1.** A spot welding method for welding an upper member and a lower member, each made of a thin steel sheet, with the upper member and the lower member stacked and sandwiched by electrodes, the spot welding method including providing projections being configured to be used for relative positioning of the upper member and the lower member and to be subjected to the welding, the spot welding method comprising
forming the projections by drawing so that each of the projections has a truncated cone shape, a gradient from 45° to 70°, and a bottom being opened, the opening having an outer diameter smaller than an outer diameter of the corresponding electrode, the projections being provided on the upper member and the lower member respectively and being configured to be fitted to each other.

**2.** The spot welding method according to claim 1, wherein
a contact portion of a lower surface of a top portion of the upper member and a contact portion of an upper surface of a top portion of the lower member are shaped so as to allow the lower surface of the top portion of the projection of the upper member and the upper surface of the top portion of the projection of the lower member to be in contact with each other only in center portions.

**3.** The spot welding method according to claim 2, wherein
the lower surface of the top portion of the projection of the upper member in the contact portion is formed to be a flat surface or a curved shape to have a spherical surface, and the upper surface of the top portion of the projection of the lower member is formed to be a curved shape to have a spherical surface having a smaller curvature radius as compared to the curved shape of the lower surface of the top portion of the upper member.

**4.** The spot welding method according to any one of claims 1 to 3, wherein
each of the projections has a height from 1.5 mm to 2.4 mm.

**5.** The spot welding method according to any one of claims 1 to 4, wherein
each of the projections is formed such that the thin steel sheet has an elongation percentage from 30% to 10%.

**6.** The spot welding method according to any one of claims 1 to 5, wherein
the projections to be fitted to each other include two or more projections including at least main reference projections and sub reference projections provided such that one of the projections provided on the lower member enters, with a predetermined clearance, one of the projections provided on the upper member, and
the projections to be fitted to each include a set of the main reference projections having a clearance S along an X-axis direction and a Y-axis direction, and a set of the sub reference projections having a clearance D, which is larger than the clearance S, along the X-axis direction and having the clearance S along the Y-axis direction, where the X-axis is a direction of connecting a center of the main reference projections and a center of the sub reference projections and the Y-axis is a direction perpendicular to the direction of connecting the center of the main reference projections and the center of the sub reference projections.

**7.** The spot welding method according to claim 6, wherein
a shape guide is provided so as to be in contact with a portion of a flat surface of the upper member in at least one position, the flat surface of the upper member being substantially perpendicular to a flat surface of the lower member, the flat surface of the lower member being to be subjected to the spot welding, and the shape guide is configured to guide the relative positioning of the upper member and the lower member.

**8.** The spot welding method according to claim 7, wherein
the shape guide is provided so as to limit movement along a direction perpendicular to the direction of connecting the center of the main reference projections and the center of the sub reference projections.

**9.** The spot welding method according to any one of claims 1 to 8, wherein
the projections to be fitted to each other are formed to have process accuracy as specified by JISB0408.
